# EUROPEAN PATENT APPLICATION

(11) **EP 4 717 611 A2**
(43) Date of publication of application: **01.04.2026**
(21) Application number: 25202548.1
(22) Date of filing: 16.09.2025
(51) Int. Cl.: B65B 5/10, B65B 35/18, B65B 35/24, B65B 35/56, B65B 57/06, B65B 57/08, B65G 43/00, B65B 63/02

(54) **ARTICLE STORAGE SYSTEM**

(30) Priority: 20.09.2024 JP 2024163897
(71) Applicant: Ishida Co., Ltd., Kyoto-shi Kyoto 606-8392 (JP)
(72) Inventor: SATA, Kohei, Ritto-shi, Shiga, 520-3026 (JP); YOKOTA, Yuji, Ritto-shi, Shiga, 520-3026 (JP)
(74) Representative: Kalhor-Witzel, Ronak

(57) **Abstract**

An article storage system 100 includes an article storage device 1 and a central controller 110 for controlling the operation of the article storage device 1. The plurality of article storage devices 1 are arranged side by side such that boxes B can be transferred between adjacent article storage devices 1 via the box transport unit 40. A single box B is sequentially transported from one article storage device 1 to another. The central controller 110 acquires the status of the article storage devices 1 and, when an abnormality occurs in any article storage device 1, continues the operation of article storage devices 1 located upstream and/or downstream of the article storage device 1 where the abnormality has occurred in the transport direction of the box B.

## Description

### TECHNICAL FIELD

The present disclosure relates to an article storage system.

### BACKGROUND

Japanese Patent Application No. 2023-99556 (Japanese Unexamined Patent Publication No. 2024-180103) discloses an article storage device including an article transport unit configured to transport articles, a box transport unit configured to transport boxes for accommodating articles, and a storage mechanism configured to accommodate articles transported by the article transport unit in boxes transported by the box transport unit.

### SUMMARY

In an article storage system including a plurality of article storage devices, each device may accommodate articles of different types or shapes. In such a system, multiple article storage devices are arranged side by side, and after articles are accommodated in a box by one article storage device, the box is transported to the next article storage device, which then accommodates articles in the box. In such an article storage system where multiple devices operate in coordination, if a malfunction (abnormality) occurs in one article storage device, the operation of all other article storage devices stops. This can result in a reduction in the operating rate of the article storage system.

One aspect of the present disclosure aims to provide an article storage system capable of suppressing reduction in operating rate.
(1) An article storage system according to one aspect of the present disclosure includes: an article storage device including an article transport unit configured to transport articles, a box transport unit configured to transport boxes for accommodating the articles, and a storage mechanism configured to accommodate the articles transported by the article transport unit in the boxes; and a control device configured to control the operation of the article storage device. The plurality of article storage devices are arranged side by side such that boxes can be transferred between adjacent article storage devices via the box transport unit. A single box is sequentially transported from one article storage device to another. The control device acquires the status of the article storage devices and, when an abnormality occurs in any article storage device, continues the operation of article storage devices located upstream and/or downstream of the article storage device where the abnormality has occurred in the transport direction of the box.

In the article storage system according to one aspect of the present disclosure, the control device acquires the status of the article storage devices and, when an abnormality occurs in any article storage device, continues the operation of article storage devices located upstream and/or downstream of the article storage device where the abnormality has occurred in the transport direction of the box. For example, in the article storage system, the article storage devices downstream of the device with the abnormality continue to accommodate articles and transport boxes. In the article storage system, article storage devices upstream of the device with the abnormality continue to accommodate articles. As a result, in the article storage system, article storage devices other than the one where the abnormality has occurred can continue operation. Therefore, the article storage system can suppress a reduction in operating rate.
(2) In the article storage system of (1), when the abnormality in an article storage device is resolved and the device resumes operation, the control device may, for a predetermined period, operate the resumed article storage device at a speed higher than before the abnormality occurred. With this configuration, even if an abnormality occurs in an article storage device and part of the article storage system temporarily stops, increasing the operating speed of the resumed article storage device (at least one of the box transport unit and the storage mechanism) after the abnormality is resolved can suppress a reduction in operating rate.
(3) In the article storage system of (1) or (2), the article storage device may include a leveling mechanism, located upstream or downstream of the storage mechanism in the transport direction of the transport unit of a box transport unit, for pressing and leveling articles accommodated in the box. With this configuration, articles accommodated in a box transferred from another article storage device or to be transferred to another article storage device can be leveled by the leveling mechanism. In this way, in the article storage system, the risk of articles overflowing and falling from the box during storage or transport due to stacking within the box is reduced.
(4) In the article storage system of (3), the leveling mechanism may include an adjustment mechanism capable of adjusting the position at which articles are pressed. With this configuration, the leveling mechanism can adjust the position at which articles are pressed. In this way, in the leveling mechanism, it is possible to press and level the articles at an appropriate position within the box.

According to one aspect of the present disclosure, a reduction in operating rate can be suppressed.

### BRIEF DESCRIPTION OF THE DRAWINGS

FIG. 1 is a schematic diagram illustrating the article storage system.
FIG. 2 is a diagram illustrating the configuration of the article storage system.
FIG. 3 is a diagram illustrating the configuration of the article storage device.
FIG. 4 is a schematic perspective view illustrating the configuration of the article storage device.
FIG. 5 is a perspective view of the article storage device, when an input conveyor is viewed from the alignment conveyor side, with the contact surface between the input conveyor and the bag instantaneously disengaged.
FIG. 6 is a front view showing the posture of the bag as it falls from the input conveyor, with the contact surface between the input conveyor and the bag instantaneously disengaged.
FIG. 7 is a front view of the storage mechanism.
FIGS. 8A and 8B are perspective views illustrating the configuration of the leveling mechanism.
FIG. 9 is a schematic side view of the storage mechanism holding multiple bags together.
FIG. 10 is a schematic side view of the storage mechanism transferring multiple bags in a box.
FIG. 11 is a diagram for explaining the operation of the article storage system.

### DETAILED DESCRIPTION

Hereinafter, preferred embodiments of the present disclosure will be described in detail with reference to the accompanying drawings. In the description of the drawings, identical or equivalent elements are denoted by the same reference numerals, and redundant descriptions are omitted.

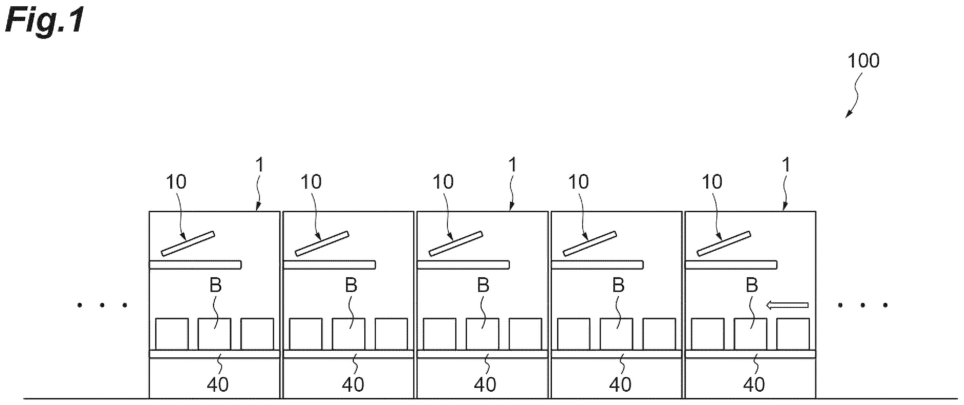

FIG. 1 is a schematic diagram illustrating the article storage system. As shown in FIG. 1, the article storage system 100 includes a plurality of article storage devices 1. The plurality of article storage devices 1 are arranged in a row. Although FIG. 1 illustrates five article storage devices 1, the number of article storage devices 1 may be four or fewer, or six or more.

In the article storage system 100, each article storage device 1 accommodates different types of articles in a box B. In this embodiment, the articles are bags G accommodating items. The box B is, for example, a cardboard box. In the article storage system 100, for example, in one article storage device 1, bags G accommodating product "A" are accommodated in the box B, while in another article storage device 1, bags G accommodating product "B" are accommodated in the box B. As a result, the article storage system 100 accommodates multiple types of bags G in the box B. In the article storage system 100, a single box B is sequentially transported from one article storage device 1 to another. In this embodiment, in a plurality of article storage devices 1, the box B is transported from the right side to the left side in the drawings as an example.

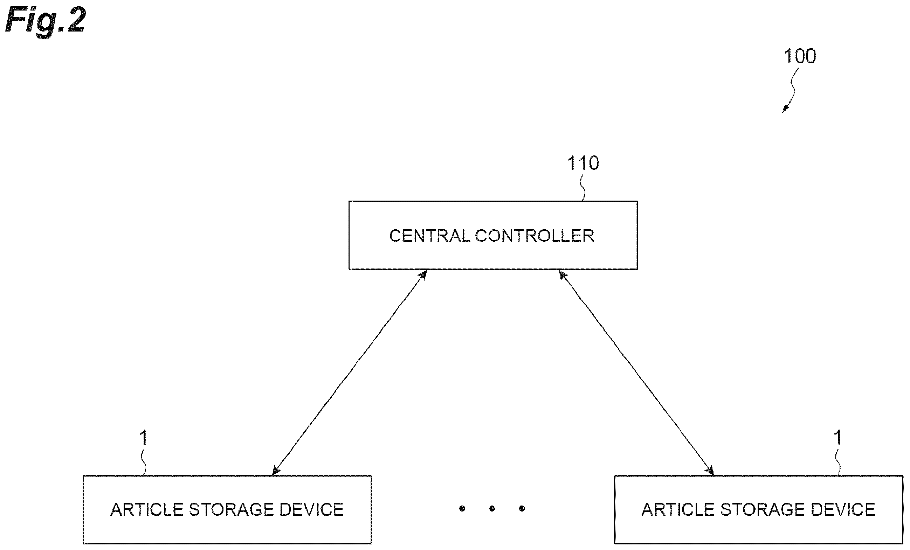

FIG. 2 is a diagram illustrating the configuration of the article storage system 100. As shown in FIG. 2, the article storage system 100 includes a central controller (control device) 110. The central controller 110 controls the entire article storage system 100. The central controller 110 may be configured by a computer including a processor, a main memory, an auxiliary memory, a communication control unit, an input device, and an output device. The central controller 110 may be configured by a single computer or multiple computers. When multiple computers are used, they are connected via a communication network such as the Internet or an intranet, logically forming a single master system.

The central controller 110 is provided to communicate with the plurality of article storage devices 1 via wired or wireless connections. The central controller 110 sends production information indicating the production plan for the article storage system 100 to each of the plurality of article storage devices 1. Based on information sent from each of the plurality of article storage devices 1, the central controller 110 generates operation signals to control the operation of the article storage devices 1.

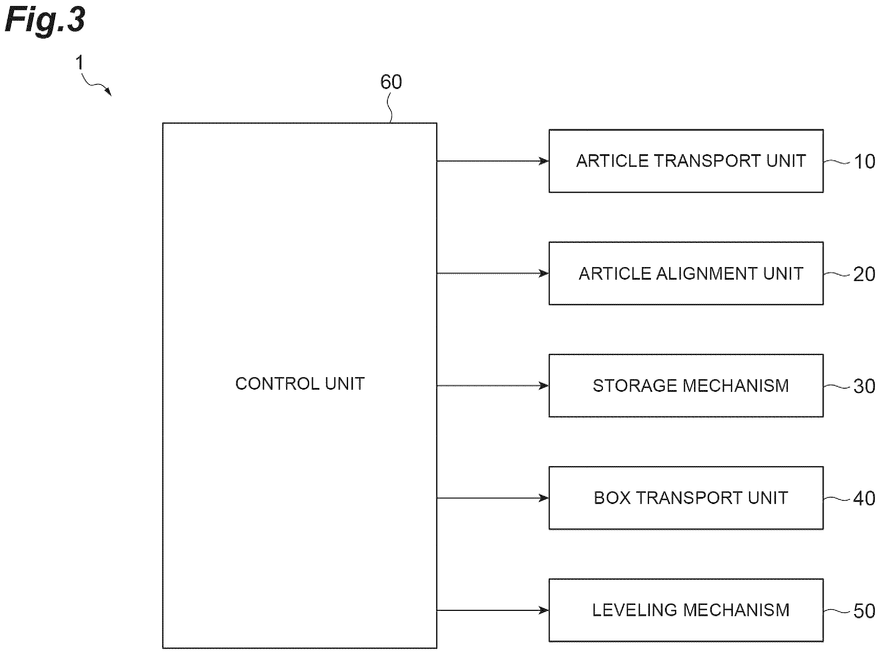

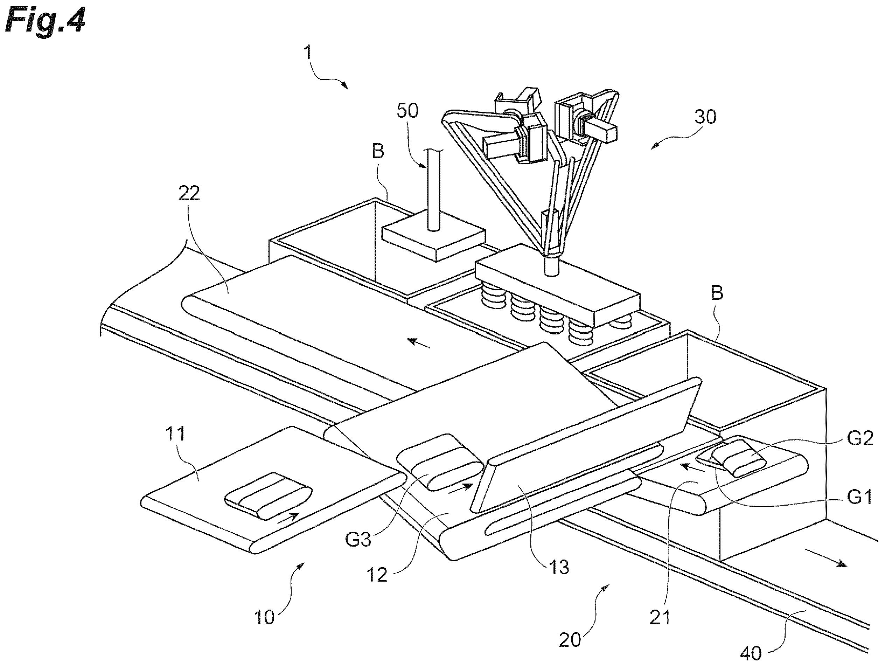

FIG. 3 is a diagram illustrating the configuration of the article storage device 1. FIG. 4 is a schematic perspective view illustrating the configuration of the article storage device 1. As shown in FIGS. 3 and 4, the article storage device 1 includes an article transport unit 10, an article alignment unit 20, a storage mechanism 30, a box transport unit 40, a leveling mechanism 50, and a control unit 60.

The article storage device 1 transports bags G and accommodates them in a box B. In the upstream process of the bag G transport path of the article storage device 1, devices such as a weighing device and a bag-making packaging machine (not shown) are arranged. Only bags G that have passed inspections for weight, seal integrity, and foreign matter contamination in the upstream process are supplied to the article storage device 1.

The article transport unit 10 receives bags G from the upstream process device and transports them to the article alignment unit 20. The article transport unit 10 includes an article introduction conveyor 11 and an input conveyor 12. The article introduction conveyor 11 receives bags G that have passed inspections for weight, seal integrity, and foreign matter contamination and guides them to the input conveyor 12. The input conveyor 12 transports the bags G from the article introduction conveyor 11 to the article alignment unit 20.

The transport surface of the input conveyor 12 is inclined relative to the horizontal plane. Specifically, when a bag G is transferred from the input conveyor 12 to the alignment conveyor 21 (described later) of the article alignment unit 20, the posture of the bag G is inclined such that the part that lands on the bags G already placed on the alignment conveyor 21 is upward, while the part that lands directly on the conveyor 21 is downward. As a result, the bag G lands on the alignment conveyor 21 before or simultaneously with contacting previously placed bags G. Since the frictional force between the alignment conveyor 21 and the bag G exceeds the frictional force between bags G, slipping between bags G is prevented, and posture disturbance is suppressed.

At the lower end of the input conveyor 12 in the inclination direction, a support conveyor 13 is provided to support the bag G, prevent it from falling, and guide it in the transport direction. The transport surface of the support conveyor 13 is perpendicular to the transport surface of the input conveyor 12.

A bag G moving on the upper side in the inclination direction of the transport surface of the input conveyor 12 is subjected to a gravity component along the inclination direction, causing it to slide downward toward the support conveyor 13 while moving, and thereafter move along the support conveyor 13. The transport surface of the support conveyor 13 moves in the traveling direction of the transport surface of the input conveyor 12 so as not to hinder the transport of the bag G. In this embodiment, when the bag G reaches the front end of the input conveyor 12, the contact surface between the input conveyor 12 and the bag G is instantaneously disengaged, thereby maintaining the posture of the bag G during its fall as it was during transport.

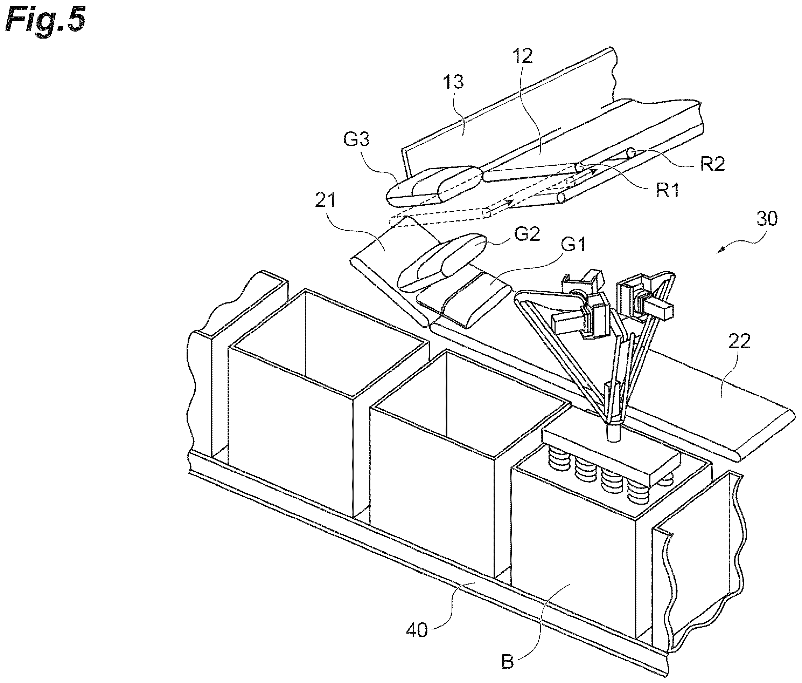

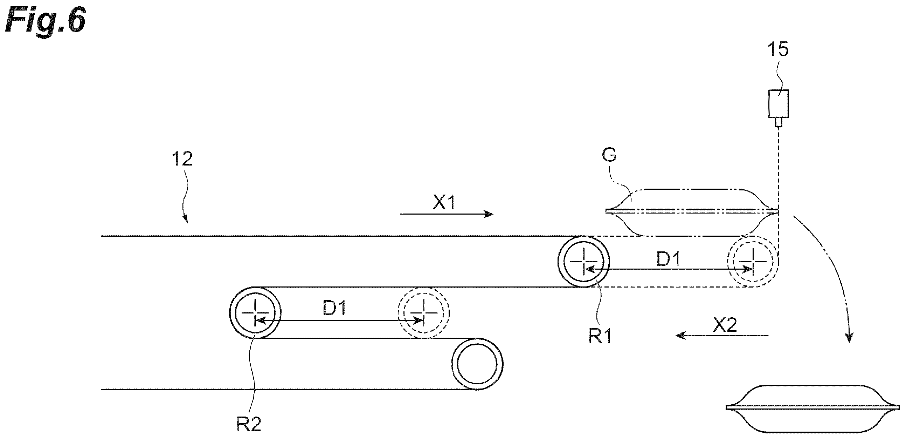

FIG. 5 is a perspective view of the article storage device 1 when the input conveyor 12 is viewed from the alignment conveyor 21 side, with the contact surface between the input conveyor 12 and the bag G instantaneously disengaged. FIG. 6 is a front view showing the posture of the bag G as it falls from the input conveyor 12, with the contact surface between the input conveyor 12 and the bag G instantaneously disengaged.

As shown in FIGS. 5 and 6, when a position sensor 15 detects that the front end of the bag G has reached the front end of the input conveyor 12 as the bag G is transported downstream of the input conveyor 12, the front end roller R1 of the input conveyor 12 moves a distance D1 in the direction X2, opposite to the transport direction (first direction X1). At this time, the intermediate roller R2 of the input conveyor 12 also moves the distance D1 in the direction X2 in coordination, absorbing the slack in the conveyor belt whenthe front end roller R1 moved in the direction X2.

Since the front end of the input conveyor 12 instantaneously moves upstream of the bag G, the bag G suddenly loses the reaction force from the transport surface of the input conveyor 12 but maintains its transport posture due to inertia. As a result, the landing posture on the alignment conveyor 21 is more likely to be maintained as the posture when leaving the input conveyor 12, suppressing posture disturbance upon landing.

As shown in FIGS. 4 and 5, the article alignment unit 20 aligns the bags G supplied from the article transport unit 10. The article alignment unit 20 includes an alignment conveyor 21 and an output conveyor 22. The alignment conveyor 21 transports each received bag G a fixed distance toward the output conveyor 22. In the article alignment unit 20, the bag G moves a fixed distance toward the output conveyor 22 from the position where it lands. In the article alignment unit 20, a portion of a subsequently landing bag G lands on the alignment conveyor 21, while the remaining portion leans against the previous bag G, tilting. As a result, the bags G on the alignment conveyor 21 form a row with adjacent bags partially overlapping one another.

In the article alignment unit 20, after the last bag G in the row lands on the alignment conveyor 21, the alignment conveyor 21 and the output conveyor 22 start operating simultaneously, transporting in the same direction. In the article alignment unit 20, N bags G aligned in a row on the alignment conveyor 21 are transferred to the output conveyor 22 as one article group, while any article group already on the output conveyor 22 moves further downstream.

The input conveyor 12 of the article transport unit 10 and the alignment conveyor 21 of the article alignment unit 20 are arranged such that their transport directions are perpendicular to each other. Since the alignment conveyor 21 transports each received bag G a fixed distance toward the output conveyor 22, a portion of the bag G lands on the alignment conveyor 21, while the remaining portion leans against the previous bag G, tilting, forming a row with adjacent bags partially overlapping one another. In the article alignment unit 20, if a bag G falls in a horizontal posture, the following bag G lands directly on the top surface of a waiting bag G, potentially bouncing in an unintended direction. To suppress this, in this embodiment, measures are taken to ensure the bag G lands on the alignment conveyor 21 in a posture suitable for alignment.

The storage mechanism 30 accommodates (transfers) multiple bags G aligned in the article alignment unit 20 in a box B. The storage mechanism 30 is a parallel linkage robot with three sets of links. The storage mechanism 30 lifts an article group of bags G transported on the output conveyor 22, moves horizontally, and heads toward the top of the box B. Upon reaching above the box B, the storage mechanism 30 transfers the article group into the box B.

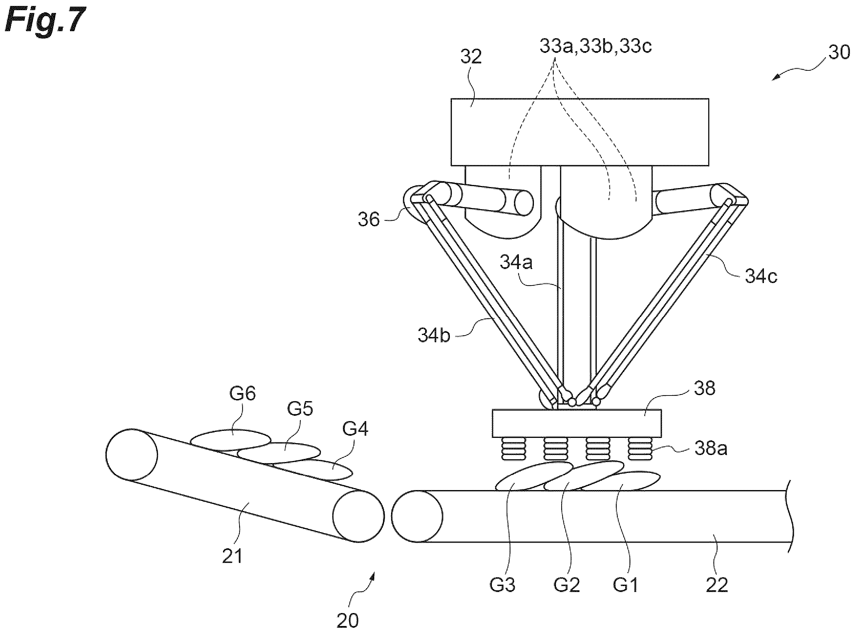

FIG. 7 is a front view of the storage mechanism 30. As shown in FIG. 7, the storage mechanism 30 includes a base 32, three servo motors 33a, 33b, and 33c, parallel-link arms 34a, 34b, and 34c, and a vacuum holder 38. The storage mechanism 30 is a robot configured with these components.

The base 32 is located above the output conveyor 22 or the box B (see FIG. 4). The base 32 holds the three servo motors 33a, 33b, and 33c at equal intervals below it.

The upper ends of the parallel-link arms 34a, 34b, and 34c are connected to the output shafts of the servo motors 33a, 33b, and 33c, respectively, and their lower ends are connected to the vacuum holder 38. Each parallel-link arm 34a, 34b, and 34c extends from the output shaft of the respective servo motor 33a, 33b, and 33c to the vacuum holder 38.

During the operation of the storage mechanism 30, the rotational displacement and direction of the output shafts of the servo motors 33a, 33b, and 33c are appropriately controlled, causing the lower ends of the parallel-link arms 34a, 34b, and 34c to move in the horizontal and vertical directions, allowing the vacuum holder 38 to move to any position within a specific three-dimensional space.

The vacuum holder 38 has multiple vacuum pads 38a at its lower part. Each vacuum pad 38a is connected to a suction tube 36 extending from a vacuum pump or vacuum blower (not shown), enabling switching between a suction holding state and a suction release state for the bag G. By suction and release of an article group by the vacuum pads 38a, the vacuum holder 38 can suction or release the article group.

Specifically, the vacuum holder 38 suctions bags G1, G2, and G3 on the output conveyor 22 together, the parallel-link arms 34a, 34b, and 34c lift the vacuum holder 38 and move it horizontally, and the vacuum holder 38 releases the suction above the box B. As a result, bags G1, G2, and G3 are released from the vacuum holder 38 and transferred in the box B.

While the first article group (bags G1, G2, and G3) is being transferred, the next second article group (bags G4, G5, and G6) is already waiting on the alignment conveyor 21. Since a spacing is maintained between the first and second article groups in the transport direction, the vacuum holder 38 avoids suctioning the bags G4, G5, and G6 of the second article group while the storage mechanism 30 is transferring the first article group.

The box transport unit 40 transports the box B. The box transport unit 40 is a belt conveyor. For example, the box transport unit 40 can hold three boxes B. The box transport unit 40 transports the box B after bags G are accommodated in it by the storage mechanism 30. The box transport unit 40 receives a box B from the box transport unit 40 of an article storage device 1 located upstream in the transport direction of the box B within the article storage system 100. The box transport unit 40 transfers the box B to the box transport unit 40 of an article storage device 1 located downstream in the transport direction of the box B within the article storage system 100.

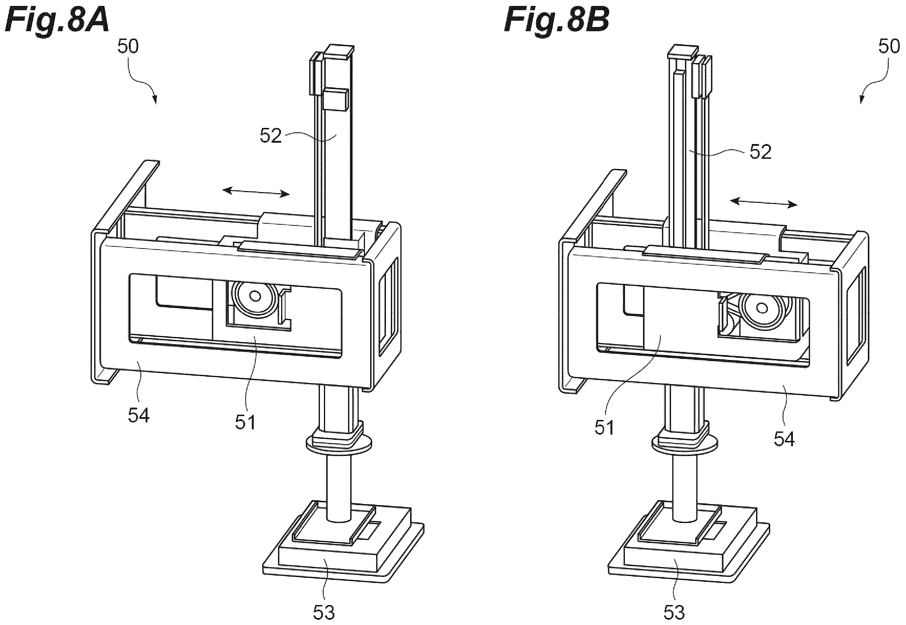

FIGS. 8A and 8B are perspective views illustrating the configuration of the leveling mechanism 50. The leveling mechanism 50 presses and levels bags G accommodated in the box B. The leveling mechanism 50 is arranged upstream or downstream of the storage mechanism 30 in the transport direction of the box transport unit 40. In this embodiment, the leveling mechanism 50 is arranged upstream of the storage mechanism 30 in the transport direction of the box transport unit 40.

The leveling mechanism 50 includes a drive unit 51, a movable unit 52, a pressing unit 53, and a mounting unit 54. The drive unit 51 drives the movable unit 52. The drive unit 51 includes a drive source (such as a motor). The movable unit 52 is provided to be movable in the vertical direction by the drive of the drive unit 51. The pressing unit 53 is the part that presses (contacts) the bags G. The pressing unit 53 is provided at the front end (lower end) of the movable unit 52. The mounting unit 54 is a bracket for attaching the leveling mechanism 50 to the article storage device 1 (frame, etc.).

The drive unit 51, movable unit 52, and pressing unit 53 are integrally provided. The drive unit 51 (including the movable unit 52 and pressing unit 53) is detachably provided at the mounting unit 54. The drive unit 51 can be attached to the mounting unit 54 in different orientations. In FIGS. 8A and 8B, the drive unit 51 is attached to the mounting unit 54 in different orientations.

The drive unit 51 is provided to be movable in the direction indicated by the arrow at the mounting unit 54. The drive unit 51 is fixed to the mounting unit 54, for example, by a fastener (such as a bolt). By changing the orientation of the drive unit 51 relative to the mounting unit 54 and/or the position of the drive unit 51 on the mounting unit 54, the position at which the leveling mechanism 50 presses the bags G (the position of the pressing unit 53) can be adjusted. The drive unit 51 and the mounting unit 54 constitute an adjustment mechanism capable of adjusting the position at which the bags G are pressed.

The control unit 60 controls the operation of the article storage device 1. The control unit 60 includes a Central Processing Unit (CPU), a Read Only Memory (ROM), a Random Access Memory (RAM), and the like. The ROM stores programs and the like for controlling the article storage device 1. The control unit 60 is capable of communicating with the central controller 110.

The control unit 60 controls the operations of the article transport unit 10, article alignment unit 20, storage mechanism 30, box transport unit 40, and leveling mechanism 50. The control unit 60 controls each component (mechanism) based on production information sent from the central controller 110. The production information includes information for controlling the operating speed of the article storage device 1.

When an abnormality occurs in any of the article transport unit 10, article alignment unit 20, storage mechanism 30, box transport unit 40, or leveling mechanism 50, the control unit 60 stops the operation of the article storage device 1. Abnormalities include, for example, transport failure with bags G in the article transport unit 10, misalignment with bags G in the article alignment unit 20, storage failure in the storage mechanism 30, transport failure with boxes B in the box transport unit 40, or leveling failure in the leveling mechanism 50. When an abnormality occurs, the control unit 60 sends an abnormality signal indicating the occurrence of the abnormality (operation stoppage) to the central controller 110.

When the abnormality in the article storage device 1 is resolved and operation can resume, the control unit 60 sends an operation signal indicating resumption to the central controller 110. In response to sending the operation signal, the control unit 60 receives an operation signal from the central controller 110 and resumes (restarts) the operations of the article transport unit 10, article alignment unit 20, storage mechanism 30, box transport unit 40, and leveling mechanism 50 based on the operation signal.

Next, the operation of the article storage device 1 will be described. In this embodiment, the operation is described assuming a state where bags G1, G2, and G3, which have passed inspections, are introduced from the upstream side to the article introduction conveyor 11 and are sequentially supplied to the input conveyor 12.

The input conveyor 12 transports the bag G1 supplied from the article introduction conveyor 11 toward the alignment conveyor 21. When the front end of the bag G1 reaches the front end of the input conveyor 12, as shown in FIG. 6, the front end of the input conveyor 12 instantaneously moves a distance D1 in the direction X2, opposite to the first direction X1. The bag G1 lands on the alignment conveyor 21 while maintaining the posture just before the contact surface with the input conveyor 12 is removed. When there are no preceding bags on the alignment conveyor 21, the bag G1 becomes the head of the row on the alignment conveyor 21. For convenience of explanation, the bag G1 is described as the head of the row.

Upon receiving the bag G1, the alignment conveyor 21 transports the bag G1 a fixed distance toward the output conveyor 22 and waits to receive the subsequent bag G2. Similarly, when the front end of the bag G2 reaches the front end of the input conveyor 12, the contact surface with the input conveyor 12 is instantaneously disengaged, and the bag G2 lands on the alignment conveyor 21 while maintaining its posture. Since the input conveyor 12 is inclined such that the part landing on the bag G1 already placed on the alignment conveyor 21 is higher and the part landing directly on the alignment conveyor 21 is lower, the bag G2 falls while maintaining this inclined posture, with a portion landing on the bag G1 and the remaining portion landing on the alignment conveyor 21.

Upon receiving the bag G2, the alignment conveyor 21 transports the bags G1 and G2 a fixed distance toward the output conveyor 22 and waits to receive the subsequent bag G3. Similarly, when the front end of the bag G3 reaches the front end of the input conveyor 12, the contact surface with the input conveyor 12 is instantaneously disengaged, and the bag G3 lands on the alignment conveyor 21 while maintaining its posture. The bag G3 lands with a portion on the bag G2 and the remaining portion on the alignment conveyor 21. FIG. 5 shows the bag G3 immediately after the contact surface with the input conveyor 12 is removed.

The bags G1, G2, and G3 on the alignment conveyor 21 form a row with adjacent bags partially overlapping one another. When the row of bags G1, G2, and G3 is completed, the alignment conveyor 21 transports the row as one article group toward the output conveyor 22. At this time, since the output conveyor 22 also operates in the same direction, the article group on the alignment conveyor 21 is transferred to the output conveyor 22. If there is a preceding article group on the output conveyor 22, that article group moves further downstream.

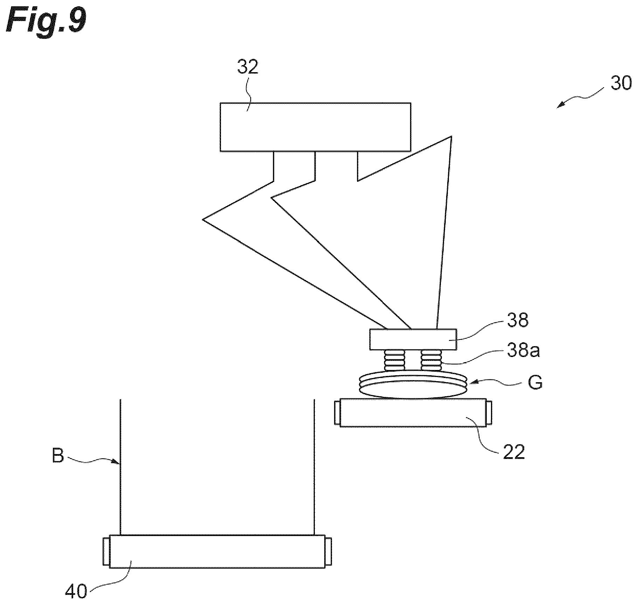

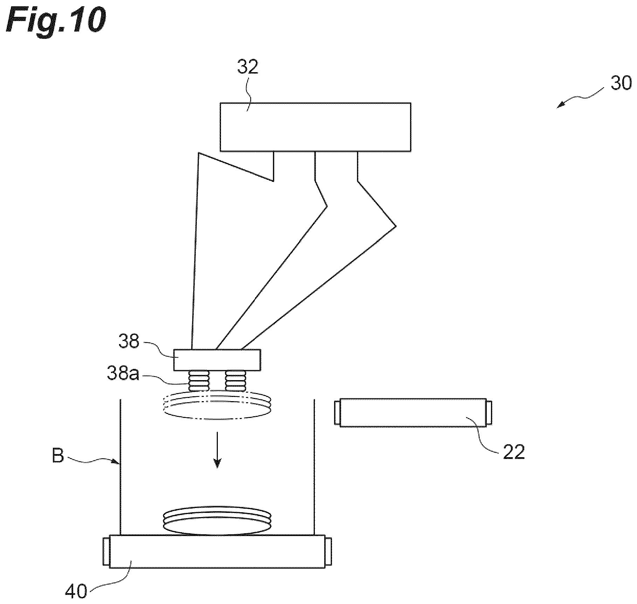

FIG. 9 is a schematic side view of the storage mechanism 30 holding multiple bags G together. FIG. 10 is a schematic side view of the storage mechanism 30 transferring multiple bags G in a box B. As shown in FIGS. 9 and 10, the vacuum holder 38 of the storage mechanism 30 collectively suctions multiple bags G of an article group moving on the output conveyor 22, transports them to the box B, and transfers them in the box B. The box B is moved to the next position by the box transport unit 40 each time an article group is deposited.

The article storage device 1 repeats the above operations to fill the box B with the required bags G. In the article storage device 1, since the alignment conveyor 21 of the article alignment unit 20 supplies aligned article groups of multiple bags G to the output conveyor 22, the vacuum holder 38 of the storage mechanism 30 can transfer multiple bags G of an article group in the box B together. This ensures that even if bags G are continuously supplied from the article transport unit 10, the article alignment unit 20 provides sufficient time for the storage mechanism 30 to align the bags G, preventing the storage mechanism 30 from being overwhelmed by the transfer of bags G. Additionally, in the article storage device 1, aligned article groups of bags G are temporarily stored on the alignment conveyor 21 and the output conveyor 22, avoiding situations where the supply of article groups to the storage mechanism 30 cannot keep up.

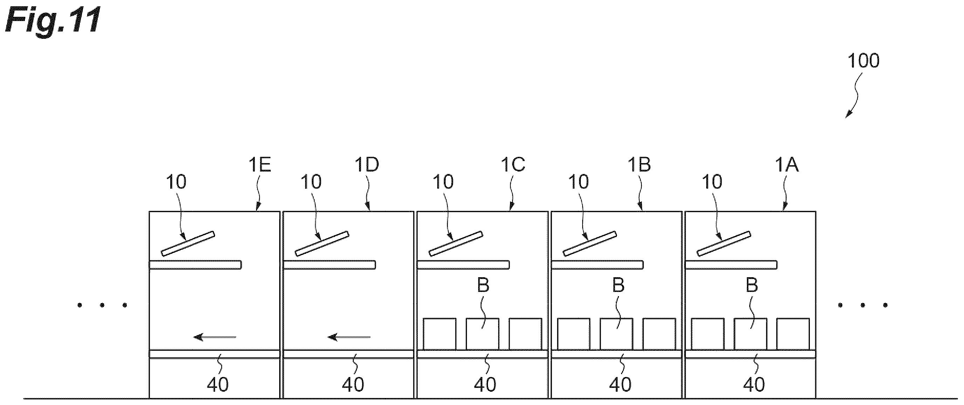

Next, the operation of the article storage system 100 will be described with reference to FIG. 11. FIG. 11 is a diagram for explaining the operation of the article storage system 100. As shown in FIG. 1, in the article storage system 100, the plurality of article storage devices 1 are arranged side by side such that boxes B can be transferred between adjacent article storage devices 1 via the box transport unit 40. In the following description, as shown in FIG. 11, the plurality of article storage devices 1 may be referred to as article storage devices 1A, 1B, 1C, 1D, and 1E to distinguish them.

In the article storage system 100, the central controller 110 acquires the status of each of the plurality of article storage devices 1. Specifically, the control unit 60 of each article storage device 1 sends an abnormality signal to the central controller 110 when an abnormality occurs in the article storage device 1. Upon receiving the abnormality signal, the central controller 110 acquires the status that an abnormality has occurred in the article storage device 1 that sent the abnormality signal.

When an abnormality occurs in any article storage device 1, the central controller 110 continues the operation of article storage devices 1 located upstream and/or downstream of the article storage device 1 where the abnormality has occurred in the transport direction of the bag G. The central controller 110 continues the operation of any of the article transport unit 10, article alignment unit 20, storage mechanism 30, box transport unit 40, and leveling mechanism 50.

For example, if an abnormality occurs in article storage device 1C, the central controller 110 sends an operation signal to article storage devices 1A and 1B, located upstream of article storage device 1C, to continue accommodating bags G in the box B via the storage mechanism 30 while stopping the transport of the box B via the box transport unit 40. Specifically, the central controller 110 generates and sends an operation signal to continue the operation of the storage mechanism 30 in article storage devices 1A and 1B until the storage of bags G by the storage mechanism 30 is completed.

For example, if an abnormality occurs in article storage device 1C, the central controller 110 sends a signal to article storage devices 1D and 1E, located downstream of article storage device 1C, to continue accommodating bags G in the box B via the storage mechanism 30 and transporting the box B via the box transport unit 40. Specifically, the central controller 110 generates and sends an operation signal to continue the operation of the storage mechanism 30 in article storage devices 1D and 1E until the storage of bags G by the storage mechanism 30 is completed and to transport the box B accommodating the bags G via the box transport unit 40. As a result, as shown in FIG. 11, boxes B are transferred out from article storage devices 1D and 1E.

When the abnormality in the article storage device 1 is resolved and the device resumes operation, the central controller 110 operates the resumed article storage device 1 at a speed higher than before the abnormality occurred for a predetermined period. Upon receiving an operation signal from the article storage device 1 where the abnormality occurred, the central controller 110 generates an operation signal instructing a change in the operating speed of the article storage device 1. Specifically, based on the time of receiving the operation signal, the central controller 110 generates an operation signal to operate the article storage device 1 faster than before the abnormality to enable production in accordance with the production plan. The predetermined period is set as the period (time) required (to recover from delays) to achieve production in accordance with the production plan based on the timing of resumption.

When abnormalities occur simultaneously (within the same period) in multiple article storage devices 1, the central controller 110 continues the operation of any of the article transport unit 10, article alignment unit 20, storage mechanism 30, box transport unit 40, and leveling mechanism 50 in other article storage devices 1 (those not experiencing abnormalities) based on their positional relationship with the article storage devices 1 experiencing abnormalities. The central controller 110 sets the components (mechanisms) to continue operation to achieve optimal operating rate and generates operation signals accordingly.

As described above, in the article storage system 100 according to this embodiment, the central controller 110 acquires the status of the article storage devices 1 and, when an abnormality occurs in any article storage device 1, continues the operation of article storage devices 1 located upstream and/or downstream of the article storage device 1 where the abnormality has occurred in the transport direction of the box B. For example, in the article storage system 100, article storage devices 1 downstream of the device with the abnormality continue to accommodate bags G and transport boxes B. Similarly, in the article storage system 100, article storage devices 1 upstream of the device with the abnormality continue to accommodate bags G. As a result, in the article storage system 100, article storage devices 1 other than the one where the abnormality has occurred can continue operation. Therefore, the article storage system 100 can suppress a reduction in operating rate.

In the article storage system 100 according to this embodiment, when the abnormality in an article storage device 1 is resolved and the device resumes operation, the central controller 110 operates the resumed article storage device 1 at a speed higher than before the abnormality occurred for a predetermined period. With this configuration, even if an abnormality occurs in an article storage device 1 and part of the article storage system 100 temporarily stops, increasing the operating speed of the resumed article storage device 1 (at least one of the box transport unit and the storage mechanism) after the abnormality is resolved can suppress a reduction in operating rate.

In the article storage system 100 according to this embodiment, the article storage device 1 includes a leveling mechanism 50, located upstream or downstream of the storage mechanism 30 in a transport direction of the box transport unit 40, for pressing and leveling bags G accommodated in the box B. With this configuration, bags G accommodated in a box B transferred from or to another article storage device 1 can be leveled by the leveling mechanism. In the article storage system 100, the risk of bags G overflowing and falling from the box B during storage or transport due to stacking within the box B is reduced.

Although the embodiments of the present disclosure have been described above, the present disclosure is not necessarily limited to the above-described embodiments, and various modifications are possible without departing from its gist.

In the above embodiment, the articles were described as bags G as an example. However, the articles may be other items. In the above embodiment, the box B was described as a cardboard box as an example. However, the box B may be a container or the like.

In the above embodiment, the configurations of the article transport unit 10 and the article alignment unit 20 are not limited to the above configurations.

In the above embodiment, the storage mechanism 30 was described as a robot that suctions and holds an article group formed by the alignment conveyor 21 as an example. However, the storage mechanism 30 may have other configurations.

In the above embodiment, the central controller 110 was described as operating the resumed article storage device 1 at a speed higher than before the abnormality occurred for a predetermined period when the abnormality is resolved and the device resumes operation. However, when the abnormality in an article storage device 1 is resolved and the device resumes operation, the central controller 110 may, for a predetermined period, operate one or more other article storage devices 1 in addition to the resumed article storage device 1 at a speed higher than before the abnormality occurred.

## Claims

1. An article storage system comprising:
an article storage device including an article transport unit configured to transport articles, a box transport unit configured to transport boxes for accommodating the articles, and a storage mechanism configured to accommodate the articles transported by the article transport unit in the boxes; and
a control device configured to control the operation of the article storage device,
wherein the plurality of article storage devices are arranged side by side such that boxes can be transferred between adjacent article storage devices via the box transport unit,
a single box is sequentially transported from one article storage device to another, and
the control device acquires the status of the article storage devices and, when an abnormality occurs in any article storage device, continues the operation of article storage devices located upstream and/or downstream of a transport direction of the box with respect to the article storage device where the abnormality has occurred in the transport direction of the box.

2. The article storage system according to claim 1, wherein the control device, when the abnormality in the article storage device is resolved and the article storage device resumes operation, operates the resumed article storage device at a speed higher than before the abnormality occurred for a predetermined period.

3. The article storage system according to claim 1 or 2, wherein the article storage device includes a leveling mechanism, located upstream or downstream of the storage mechanism in a transport direction of the box transport unit, for pressing and leveling the articles accommodated in the box.

4. The article storage system according to claim 3, wherein the leveling mechanism includes an adjustment mechanism capable of adjusting the position at which the articles are pressed.
